# FASCICULE DE BREVET EUROPEEN

(11) **EP 2 665 900 B1**
(45) Date de publication et mention de la délivrance du brevet: **30.03.2016**
(21) Numéro de dépôt: 12702601.1
(22) Date de dépôt: 10.01.2012
(51) Int. Cl.: F01M 5/00

(54) **PROCÉDÉ ET DISPOSITIF D'ALIMENTATION EN LUBRIFIANT**
SCHMIERVORRICHTUNG UND VERFAHREN
DEVICE AND METHOD FOR LUBRICANT FEEDING

(30) Priorité: 19.01.2011 FR 1150421
(43) Date de publication de la demande: 27.11.2013
(73) Titulaire: Turbomeca, 64510 Bordes (FR)
(72) Inventeur: AUGROS, Philippe, Alain, François, F-64160 Serres-Morlaas (FR)
(74) Mandataire: Calvo de Nó, Rodrigo
(86) Numéro de dépôt international: PCT/FR2012/050057
(87) Numéro de publication internationale: WO 2012/098324

(56) Documents cités:
- EP-A2- 1 736 650
- GB-A- 2 086 996
- JP-A- 58 183 822
- US-A- 4 917 218

## Description

Le présent exposé concerne le domaine des procédés, systèmes et dispositifs d'alimentation en lubrifiant, en particulier pour des turbomachines.

Dans un grand nombre de turbomachines, en particulier parmi les turbomoteurs, turboréacteurs, turbopropulseurs, turbopompes ou turbocompresseurs, on peut distinguer deux zones aux températures clairement différentes. Ainsi, dans les turbomoteurs, turboréacteurs et turbopropulseurs aéronautiques on peut normalement distinguer une zone relativement froide comprenant le compresseur, et une zone relativement chaude comprenant la chambre de combustion et la turbine. Des telles turbomachines comportent aussi normalement des paliers, tant dans la zone froide comme dans la zone chaude, pour soutenir les pièces tournantes, et en particulier l'arbre moteur. Ainsi, dans une même turbomachine, un premier ensemble de paliers fonctionnera à relativement basse température, tandis qu'un deuxième ensemble de paliers fonctionnera à relativement haute température. Par « ensemble de paliers » on n'entend pas nécessairement une pluralité de paliers, mais aussi éventuellement un ensemble d'une seule unité.

Conventionnellement, un même circuit d'alimentation est utilisé pour alimenter en lubrifiant tant le premier que le deuxième ensemble de paliers. US 4,917,218 décrit par example un tel dispositif. Afin d'évacuer la chaleur transmise au lubrifiant dans les paliers, et ainsi maintenir la température du lubrifiant pendant le fonctionnement de la turbomachine, ce circuit d'alimentation comprend normalement un échangeur de chaleur et le lubrifiant est fourni aux paliers après son refroidissement dans cet échangeur, qui peut être, par exemple, un échangeur de chaleur air/lubrifiant ou un échangeur de chaleur carburant/lubrifiant, évacuant donc la chaleur du lubrifiant respectivement vers l'air ambiant ou vers un circuit de carburant.

Un tel échangeur de chaleur est une pièce comparativement complexe, lourde et volumineuse. Or, dans les applications aéronautiques en particulier, il est désirable de minimiser ces inconvénients et en particulier le poids.

En conséquence, on vise à proposer un procédé d'alimentation d'une turbomachine en lubrifiant qui permette de réduire les nécessités de refroidissement du lubrifiant, et ainsi le poids, volume et complexité de l'échangeur ou échangeurs de chaleur y associés.

Dans au moins un premier mode de réalisation, ce but est atteint grâce au fait que, dans une turbomachine comportant un premier ensemble de paliers et un deuxième ensemble de paliers fonctionnant à température sensiblement supérieure au premier ensemble, le deuxième ensemble de paliers est alimenté en lubrifiant à température sensiblement supérieure au premier ensemble.

Grâce à ces dispositions, on peut diminuer la différence de température entre les paliers du deuxième ensemble et le lubrifiant qui leur est fourni. Comme le transfert de chaleur du deuxième ensemble au lubrifiant dépend de cette différence de température, ce transfert est aussi sensiblement diminué, et de cette manière les exigences globales de refroidissement du lubrifiant.

Dans certains modes de réalisation, un débit de lubrifiant est refroidi dans un échangeur de chaleur en amont du premier ensemble de paliers. Ainsi, au moins une partie de la chaleur absorbée par le lubrifiant peut être évacuée, de manière à stabiliser sa température, sans nécessairement refroidir le débit de lubrifiant destiné au deuxième ensemble de paliers.

Dans certains modes de réalisation, un débit de lubrifiant est chauffé en amont du deuxième ensemble de paliers, ce réchauffement s'opérant par échange de chaleur avec un débit de retour de lubrifiant du deuxième ensemble de paliers. Il est ainsi possible d'augmenter la température du lubrifiant fourni au deuxième ensemble de paliers, tout en refroidissant le lubrifiant récupéré au deuxième ensemble de paliers, ce qui contribue à réduire le transfert global de chaleur du deuxième ensemble de paliers au lubrifiant.

Dans certains modes de réalisation, le premier ensemble de paliers est alimenté en lubrifiant par un premier circuit, et le deuxième ensemble de paliers est alimenté en lubrifiant par un deuxième circuit en dérivation du premier circuit, ce qui permet de traiter différemment le lubrifiant destiné à chaque ensemble de paliers, et en particulier de refroidir spécifiquement du lubrifiant fourni au premier ensemble par le premier circuit, et/ou de chauffer spécifiquement du lubrifiant fourni au deuxième ensemble, par exemple par échange de chaleur avec un débit de retour de lubrifiant du deuxième ensemble.

Le présent exposé concerne également un dispositif d'alimentation d'une turbomachine en lubrifiant, ladite turbomachine comportant un premier ensemble de paliers et un deuxième ensemble de paliers, et ledit deuxième ensemble étant apte à fonctionner à une température sensiblement plus élevée que ledit premier ensemble.

Selon au moins un mode de réalisation, le dispositif est configuré pour alimenter le deuxième ensemble en lubrifiant à température sensiblement plus élevée que le premier ensemble. Ainsi, le transfert de chaleur entre le deuxième ensemble de paliers, plus chaud, et le lubrifiant peut être diminué, réduisant de cette manière les nécessités globales de refroidissement du lubrifiant.

Dans certains modes de réalisation, le dispositif comporte un premier circuit pour alimenter en lubrifiant le premier ensemble de paliers, et un deuxième circuit pour alimenter en lubrifiant le deuxième ensemble de paliers, le premier circuit comprenant un point de dérivation vers le deuxième circuit. Il est ainsi possible de séparer, à ce point de dérivation, deux débits distincts de lubrifiant, un premier débit étant fourni au premier ensemble de paliers par le premier circuit, et un deuxième débit, plus chaud, étant fourni au deuxième ensemble par le deuxième circuit. En particulier, le premier circuit peut comprendre, entre ledit point de dérivation et le premier ensemble de paliers, un échangeur de chaleur pour le refroidissement de lubrifiant destiné à alimenter le premier ensemble de paliers, de manière à refroidir séparément le lubrifiant destiné à alimenter le premier ensemble de paliers sans affecter la température du lubrifiant destiné à alimenter le deuxième ensemble de paliers, plus chaud. Le deuxième circuit peut aussi comprendre un échangeur de chaleur pour transmettre de la chaleur d'un débit de retour de lubrifiant du deuxième ensemble de paliers à un débit de lubrifiant destiné à alimenter le deuxième ensemble de paliers, augmentant ainsi la température du lubrifiant fourni au deuxième ensemble de paliers tout en réduisant la température du lubrifiant du retour du deuxième ensemble de paliers.

Toutefois, dans certains exemples de réalisation, d'autres configurations de circuits et d'échangeurs de chaleur peuvent être considérées. Par exemple, le deuxième circuit pourrait être entièrement séparé du premier circuit, et non pas dérivé de celui-ci. Les échangeurs de chaleur du premier et du deuxième circuit peuvent aussi être intégrés dans le dispositif indépendamment l'un de l'autre. Il est même envisageable d'intégrer un échangeur de chaleur pour le refroidissement du lubrifiant en amont du point de dérivation du premier au deuxième circuit, de manière à refroidir même au moins une partie du débit de lubrifiant destiné au deuxième ensemble de paliers.

Le présent exposé concerne aussi une turbomachine comprenant un premier ensemble de paliers, un deuxième ensemble de paliers apte à fonctionner à une température sensiblement plus élevée que ledit premier ensemble, et un dispositif configuré pour alimenter le deuxième ensemble en lubrifiant à température sensiblement plus élevée que le premier ensemble, ainsi qu'un ensemble turbomoteur, en particulier aéronautique, comprenant une telle turbomachine. Comme « ensemble turbomoteur », on entend aussi un turbopropulseur ou un turboréacteur à simple ou double flux.

Grâce à ces arrangements, il est possible de réduire le poids, encombrement, coût et complexité d'une telle turbomachine et ensemble turbomoteur.

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 est une section longitudinale d'une turbomachine ;
- la figure 2 illustre schématiquement un dispositif d'alimentation en lubrifiant de l'art antérieur ;
- les figures 3A, 3B, 3C et 3D illustrent schématiquement des dispositifs d'alimentation en lubrifiant suivant, respectivement, un premier, un deuxième, un troisième et un quatrième mode de réalisation ;
- la figure 4 illustre schématiquement un échangeur de chaleur régénératif.

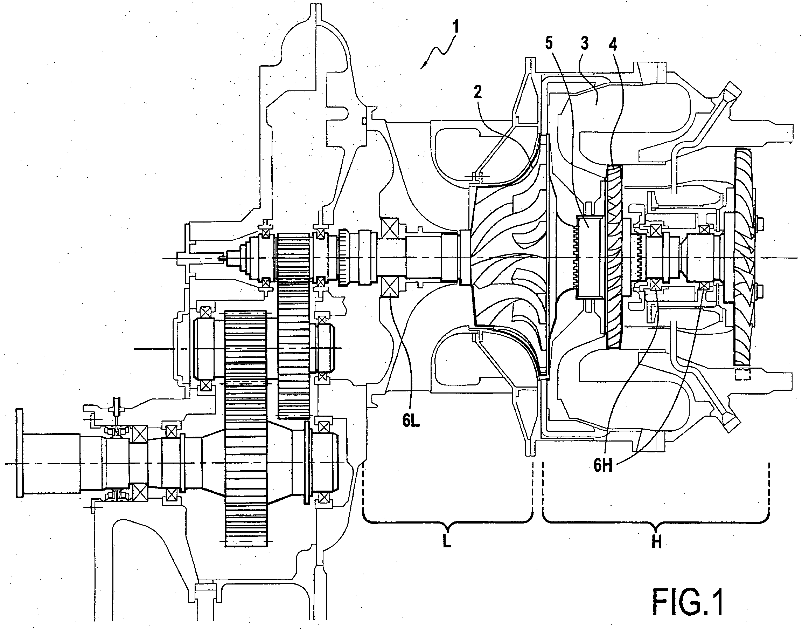

Une turbomachine 1, spécifiquement une turbomachine d'un ensemble turbomoteur d'un aéronef à voilure tournante, est présentée à titre illustratif sur la figure 1. Cette turbomachine 1 comprend une section froide L, incluant le compresseur 2, et une section chaude H, incluant la chambre de combustion 3 et la turbine 4. La turbine 4 et le compresseur 2 sont reliés par l'arbre moteur 5, qui est soutenu par une pluralité de paliers comprenant un premier ensemble de paliers 6L dans la section froide L et un deuxième ensemble de paliers 6H dans la section chaude H. Par leur position, les paliers 6H de la section chaude H sont à une température sensiblement supérieure à celle des paliers 6L de la section froide L.

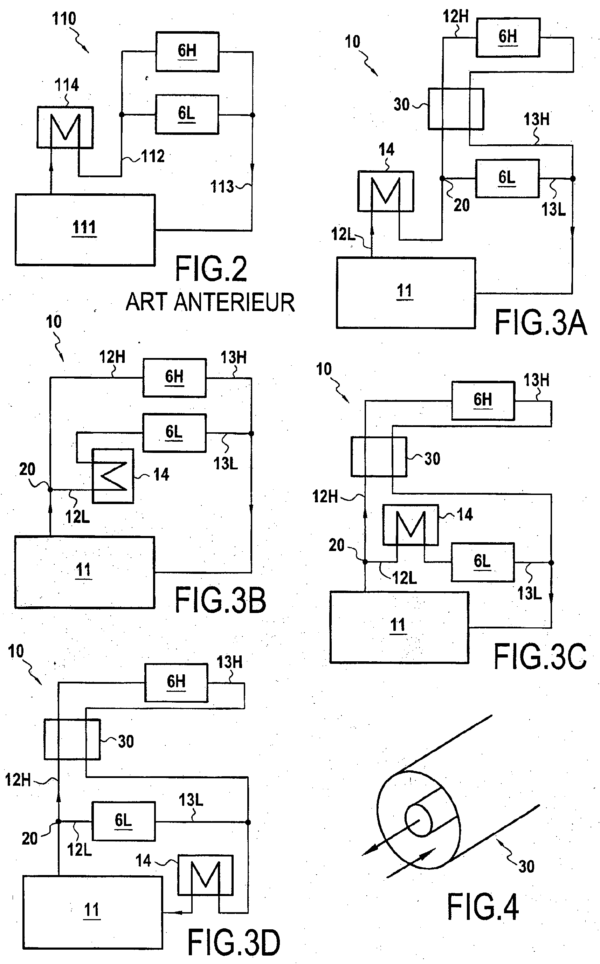

Pour assurer la lubrification des paliers 6L et 6H, une telle turbomachine comprend normalement aussi un dispositif d'alimentation des paliers en lubrifiant. Un tel dispositif de l'art antérieur est illustré sur la figure 2. Ce dispositif 110 d'alimentation en lubrifiant comporte un réservoir 111, et un même circuit 112 de lubrifiant pour l'alimentation des paliers 6L de la section froide et des paliers 6H de la section chaude H, ainsi qu'un circuit 113 pour le retour du lubrifiant des paliers 6L et 6H au réservoir 111. Tant le circuit 112 d'alimentation en lubrifiant que le circuit 113 de retour de lubrifiant peuvent comprendre des moyens conventionnels (non illustrés) pour assurer la circulation du lubrifiant et différents moyens de contrôle (pression, température, présence de particules) à travers ces circuits 112, 113, tels que des pompes, vannes, clapets et/ou filtres. En outre, le circuit 112 d'alimentation comprend un échangeur de chaleur 114 pour refroidir le lubrifiant et ainsi évacuer la chaleur absorbée aux paliers 6L et 6H. Cet échangeur de chaleur 114 peut être, par exemple, un échangeur de chaleur lubrifiant/air, pour évacuer la chaleur du lubrifiant vers l'air ambiant, un échangeur de chaleur lubrifiant/carburant, pour évacuer la chaleur du lubrifiant vers un circuit de carburant de la turbomachine, ou une combinaison des deux.

Avec ce dispositif 110 d'alimentation en lubrifiant de l'art antérieur, le lubrifiant est donc fourni aux paliers 6L et 6H à sensiblement la même température. Toutefois, comme les paliers 6H dans la section chaude H ont une température sensiblement supérieure que les paliers 6L de la section froide L, le réchauffement du lubrifiant sera plus intense aux paliers 6H qu'aux paliers 6L.

Ainsi, avec un débit global de lubrifiant D_{g} de, par exemple, 450 l/h, partagé entre un débit D_{L} de, par exemple, 300 l/h, et un débit D_{H} de, par exemple, 150 l/h, destinés respectivement aux paliers 6L et 6H, et fourni aux deux ensembles de paliers à une même température Tᵢ de, par exemple, 111°C, le débit D_{L} reçoit aux paliers 6L une puissance calorique P_{L} de, par exemple, 1,7 kW, se réchauffant jusqu'à une température T_{o,L} de, par exemple, 121°C, tandis que le débit D_{H} reçoit aux paliers 6H une puissance calorifique P_{H} de, par exemple, 4,9 kW, se réchauffant jusqu'à une température T_{o,H} de, par exemple, 171°C. Les deux débits partiels D_{L} et D_{H} se mélangeant à nouveau au réservoir 111, dans lequel le lubrifiant présente donc une température intermédiaire T_{R} de, par exemple, 138°C. Afin de refroidir le débit global Dg jusqu'à la température initiale Tᵢ, l'échangeur 114 devra donc en évacuer une puissance calorique P_{T} approximativement équivalente à l'addition des puissances caloriques P_{L} et P_{H}, c'est-à-dire 6,6 kW pour les valeurs citées à titre d'exemple. Pour évacuer le flux de chaleur transféré au lubrifiant en particulier par les paliers 6H, et éviter ainsi une surchauffe et éventuelle cokéfaction et/ou vieillissement accéléré de l'huile, l'échangeur 114 devra donc avoir des dimensions conséquentes.

La figure 3A illustre un premier mode de réalisation d'un dispositif 10 d'alimentation en lubrifiant permettant de réduire les besoins de refroidissement du lubrifiant par rapport à l'art antérieur. Ce dispositif 10 d'alimentation en lubrifiant comporte un réservoir 11, un premier circuit d'alimentation 12L pour l'alimentation en lubrifiant de l'ensemble de paliers 6L de la section froide L, un deuxième circuit d'alimentation 12H pour l'alimentation en lubrifiant de l'ensemble de paliers 6H de la section chaude H, un premier circuit de retour 13L pour le retour de lubrifiant de l'ensemble de paliers 6L vers le réservoir 11, et un deuxième circuit de retour 13H pour le retour de lubrifiant de l'ensemble de paliers 6H vers le réservoir 11. Le deuxième circuit d'alimentation 12H est dérivé du premier circuit d'alimentation 12L à un point de dérivation 20. Comme dans le dispositif de l'art antérieur, chaque circuit 12H,12L,13H et 13L peut être équipé de moyens conventionnels (non illustrés) pour impulser et commander la circulation du lubrifiant à travers ces circuits 12H,12L,13H et 13L, tels que des pompes, vannes, clapets et/ou filtres.

Dans ce premier mode de réalisation, le premier circuit d'alimentation 12L comprend, en amont du point de dérivation 20, un échangeur de chaleur 14 pour refroidir le lubrifiant destiné aux deux ensembles de paliers 6H et 6L. Cet échangeur de chaleur 14 peut être, par exemple, un échangeur de chaleur lubrifiant/air, pour évacuer la chaleur du lubrifiant vers l'air ambiant, un échangeur de chaleur lubrifiant/carburant, pour évacuer la chaleur du lubrifiant vers un circuit de carburant de la turbomachine, ou une combinaison des deux.

Un autre échangeur de chaleur 30 est interposé entre le circuit d'alimentation 12H et le circuit de retour 13H, pour chauffer le lubrifiant destiné à alimenter les paliers 6H avec la chaleur du lubrifiant de retour des paliers 6H. Un tel échangeur de chaleur régénératif 30 peut être réalisé de manière particulièrement simple avec des conduits concentriques 31,32 servant, respectivement, à l'aller et au retour du lubrifiant, comme illustré sur la figure 4.

Avec ce dispositif 10, les paliers 6H de la section chaude H de la turbomachine 1 et les paliers 6L de la section froide L peuvent être alimentés en lubrifiant à températures sensiblement différentes. Plus spécifiquement, le lubrifiant fourni par le circuit 12H aux paliers 6H sera sensiblement plus chaud que le lubrifiant fourni par le circuit 12L aux paliers 6L. En conséquence, la différence de température entre les paliers 6H et le lubrifiant qui leur est fourni en fonctionnement par le circuit 12H sera moindre qu'avec le dispositif 110 de l'art antérieur, ce qui réduira le transfert de chaleur des paliers 6H au lubrifiant, réduisant ainsi les besoins globaux de refroidissement du lubrifiant. L'échangeur de chaleur 14 pourra donc être dimensionné plus petit que l'échangeur de chaleur 114 du dispositif 110 de l'art antérieur.

Dans une turbomachine équivalente à celle dont le dispositif 110 a été précédemment décrit à titre comparatif, l'ensemble de paliers 6L de la section froide L et l'ensemble de paliers 6H de la section chaude H recevraient aussi des débits respectifs D_{L} et D_{H} de, par exemple, 300 l/h et 150 l/h de lubrifiant. La puissance calorique P_{T} à évacuer par l'échangeur de chaleur 14 pourrait toutefois être diminuée à, par exemple, 5,8 kW, avec donc une réduction de 12 % par rapport à l'échangeur de chaleur 114 du dispositif 110 de l'art antérieur. Avec la même température T_{R} du lubrifiant au réservoir 11 (138°C, dans cet exemple), le débit global Dg ne serait refroidi à l'échangeur 14 que jusqu'à une température T_{i,L} supérieure à la température Tᵢ du dispositif comparatif 110, par exemple une température T_{i,L} de 115°C. Le débit D_{L} fourni aux paliers 6L le serait à cette température T_{i,L}, et, recevant aux paliers 6L une puissance calorique P_{L} qui peut aussi être de 1,7 kW de chaleur des paliers 6L, serait retourné vers le réservoir 11 à une température T_{o,L} plus élevée que dans l'exemple comparatif de l'art antérieur, comme par exemple une température T_{o,L} de 125 °C.

D'autre part, le débit D_{H} fourni aux paliers 6H serait réchauffé, dans l'échangeur 30, par le retour de lubrifiant des mêmes paliers 6H, jusqu'à une température T_{i,H} plus élevée que la température T_{i,L}. Par exemple, la température T_{i,H} pourrait être de 135°C. Fourni à cette température T_{i,H} plus élevée aux paliers 6H, le débit D_{H} absorberait une puissance calorique P_{L} sensiblement moindre, à cause du différentiel thermique moins prononcé. Avec les valeurs citées à titre d'exemple, cette puissance calorique P_{L} serait d'uniquement 4,1 kW. Toutefois, le lubrifiant atteindra aussi, en sortie des paliers 6H, une température T_{o,H} plus élevée que dans l'exemple comparatif de l'art antérieur. Dans ce mode de réalisation, la température T_{o,H} pourrait être par exemple de 185°C. Toutefois, comme une partie de la chaleur du retour de lubrifiant des paliers 6H est ensuite transmise vers l'arrivée de lubrifiant dans l'échangeur 30, la température T_{r,H} de ce débit D_{H} à son retour au réservoir pourra être moins élevée que la température T_{o,H} de l'exemple comparatif de l'art antérieur. Par exemple, la température T_{r,H} pourrait être de 165 °C.

Le lubrifiant atteignant donc des températures plus élevées aux paliers 6H pour diminuer la puissance calorique absorbée, le principal facteur limitatif à l'heure de diminuer la puissance calorique absorbée sera la température maximale pouvant être atteinte par le lubrifiant. Comme les lubrifiants aéronautiques ont typiquement une température de cokéfaction située dans une plage entre 180°C et 210°C, la température T_{o,H} sera aussi normalement dans cette plage, juste en dessous de la température de cokéfaction du lubrifiant utilisé. Comme, à part le risque de cokéfaction du lubrifiant, l'autre facteur limitant la température maximale du lubrifiant aux paliers 6H est la résistance thermique des paliers 6H eux-mêmes, ceux-ci pourraient être produits avec des matériaux particulièrement résistants à la chaleur, tels que, par exemple des aciers à basse teneur en carbone, comme les aciers M50 et M50NiL, des aciers de nitruration comme l'acier 32 CDV 13 tel que défini par la norme aéronautique française AIR 9160, ou les céramiques.

La figure 3B illustre un mode de réalisation alternatif ne reprenant pas l'échangeur de chaleur 30 en amont et aval des paliers 6H, mais dans lequel l'échangeur 14 est placé dans le circuit 12L en aval du point de dérivation 20. Dans ce deuxième mode de réalisation, l'échangeur 14 ne refroidit donc que le débit de lubrifiant fourni aux seuls paliers 6L. Ainsi, même sans l'échangeur de chaleur supplémentaire du premier mode de réalisation, le lubrifiant fourni aux paliers 6H est plus chaud que le lubrifiant fourni aux paliers 6L, puisque seulement ce dernier est refroidi par l'échangeur 14. Les besoins de refroidissement du lubrifiant resteront donc plus modérés.

Dans une turbomachine équivalente à celle dont le dispositif 110 a été précédemment décrit à titre comparatif, l'ensemble de paliers 6L de la section froide L et l'ensemble de paliers 6H de la section chaude H recevront aussi des débits respectifs D_{L} et D_{H} qui pourraient aussi par exemple être de 300 l/h et 150 l/h. La puissance calorique P_{T} à évacuer par l'échangeur de chaleur 14 pourrait dans ce cas aussi être diminuée, par exemple à 5,5 kW, avec donc une réduction de 16 % par rapport à l'échangeur de chaleur 114 du dispositif 110 de l'art antérieur. Avec la même température T_{R} du lubrifiant au réservoir 11 (138°C, dans cet exemple), l'échangeur 14, refroidissant uniquement le débit D_{L}, même en évacuant moins de chaleur, peut toutefois en faire descendre la température T_{i,L} en dessous de la température Tᵢ de l'art antérieur, par exemple jusqu'à 104°C. Avec sensiblement la même puissance calorique P_{L} absorbée aux paliers 6L, ce débit de lubrifiant D_{L} retourne vers le réservoir 11 à une température T_{o,L} sensiblement inférieure à celle de l'art antérieur. Par exemple, la température T_{o,L} du débit D_{L} au retour au réservoir 11 dans ce mode de réalisation pourrait être de 114°C.

D'autre part, même avec des légères pertes de chaleur dans le circuit 6H, le débit de lubrifiant D_{H} est fourni aux paliers 6H à une température T_{i,H} à peine moindre que la température T_{R} du lubrifiant au réservoir 11, et donc sensiblement supérieure à la température T_{i,L} Par exemple, la température T_{i,H} dans ce mode de réalisation pourrait être de 135°C. Même avec une température T_{o,H} sensiblement plus élevée à la sortie des paliers 6H, par exemple de 185°C, le débit D_{H} n'absorbera donc aux paliers 6H qu'une puissance calorique P_{L} relativement limitée. Ainsi, avec les valeurs citées à titre d'exemple, la puissance P_{L} se limiterait à 4,2 kW.

La figure 3C présente un troisième mode de réalisation combinant les caractéristiques des premier et deuxième modes de réalisation. Ainsi, l'échangeur de chaleur 14 est situé en amont du point de dérivation 20, comme dans le deuxième mode de réalisation, mais le dispositif 10 comporte aussi un échangeur 30 interposé entre le circuit d'alimentation 12H et le circuit de retour 13H, comme dans le premier mode de réalisation. Il refroidit donc tant le lubrifiant destiné aux paliers 6L que celui destiné aux paliers 6H. Ce troisième mode de réalisation sera plus avantageux pour des dispositifs présentant un rapport plus élevé entre le débit de lubrifiant fourni aux paliers 6H et le débit de lubrifiant fourni aux paliers 6L.

Finalement, la figure 3D présente un quatrième mode de réalisation similaire au premier mode de réalisation, mais avec l'échangeur de chaleur 14 situé entre les premier et deuxième circuits de retour 13L et 13H et le réservoir 11. Le lubrifiant est donc refroidi en amont plutôt qu'en aval du réservoir, ce qui, selon les caractéristiques thermiques du réservoir 11, sa capacité et le débit de lubrifiant en circulation peut être plus ou moins efficace que l'arrangement du premier mode de réalisation.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications.

## Revendications

1. Procédé d'alimentation d'une turbomachine (1) en lubrifiant, ladite turbomachine (1) comportant au moins un premier ensemble de paliers (6L) et un deuxième ensemble de paliers (6H), tant le premier comme le deuxième ensemble étant alimentés en lubrifiant, et le deuxième ensemble de paliers (6H) fonctionnant à température sensiblement supérieure au premier ensemble, le procédé étant **caractérisé en ce que** le deuxième ensemble de paliers (6H) est alimenté en lubrifiant à température sensiblement supérieure par rapport au premier ensemble.

2. Procédé d'alimentation suivant la revendication 1, dans lequel un débit de lubrifiant est refroidi dans un échangeur de chaleur (14) en amont du premier ensemble de paliers (6L).

3. Procédé d'alimentation suivant l'une quelconque des revendications 1 ou 2, dans lequel un débit de lubrifiant est chauffé en amont du deuxième ensemble de paliers (6H), ce réchauffement s'opérant par échange de chaleur avec un débit de retour de lubrifiant du deuxième ensemble de paliers (6H).

4. Procédé d'alimentation suivant une quelconque des revendications 1 à 3, dans lequel le premier ensemble de paliers (6L) est alimenté en lubrifiant par un premier circuit (12L), et le deuxième ensemble de paliers (6H) est alimenté en lubrifiant par un deuxième circuit (12H) en dérivation du premier circuit.

5. Dispositif (10) d'alimentation d'une turbomachine (1) en lubrifiant, ladite turbomachine (1) comportant un premier ensemble de paliers (6L) et un deuxième ensemble de paliers (6H), et ledit deuxième ensemble étant apte à fonctionner à une température sensiblement plus élevée que ledit premier ensemble, le dispositif (10) étant **caractérisé en ce qu'**il est configuré pour alimenter le deuxième ensemble en lubrifiant à température sensiblement plus élevée que le premier ensemble.

6. Dispositif (10) suivant la revendication 5, comportant un premier circuit (12L) pour alimenter en lubrifiant le premier ensemble de paliers (6L), et un deuxième circuit (12H) pour alimenter en lubrifiant le deuxième ensemble de paliers (6H), le premier circuit (12L) comprenant un point de dérivation (20) vers le deuxième circuit (12H).

7. Dispositif (10) suivant la revendication 6, dans lequel le premier circuit (12L) comprend, entre ledit point de dérivation (20) et le premier ensemble de paliers (6L), un échangeur de chaleur (14) pour le refroidissement d'un débit de lubrifiant destiné au premier ensemble de paliers (6L).

8. Dispositif (10) suivant l'une quelconque des revendications 6 ou 7, dans lequel le deuxième circuit (12H) comprend un échangeur de chaleur (30) pour transmettre de la chaleur d'au moins un débit de retour de lubrifiant du deuxième ensemble de paliers (6H) à un débit de lubrifiant destiné à alimenter le deuxième ensemble de paliers (6H).

9. Turbomachine (1) comportant un premier ensemble de paliers (6L), un deuxième ensemble de paliers (6H) apte à fonctionner à une température sensiblement plus élevée que ledit premier ensemble, et un dispositif (10) d'alimentation en lubrifiant suivant une quelconque des revendications 5 à 8.

10. Ensemble turbomoteur, en particulier aéronautique, comprenant une turbomachine (1) suivant la revendication 9.

## Patentansprüche

1. Verfahren zur Versorgung einer Turbomaschine (1) mit Schmiermittel, wobei die Turbomaschine (1) wenigstens eine erste Anordnung von Lagern (6L) und eine zweite Anordnung von Lagern (6H) umfasst, wobei sowohl die erste als auch die zweite Anordnung mit Schmiermittel versorgt werden, und wobei die zweite Anordnung von Lagern (6H) bei deutlich höherer Temperatur als die erste Anordnung arbeitet, wobei das Verfahren **dadurch gekennzeichnet ist, dass** die zweite Anordnung von Lagern (6H) mit Schmiermittel mit im Vergleich zu der ersten Anordnung deutlich höherer Temperatur versorgt wird.

2. Versorgungsverfahren nach Anspruch 1, wobei eine Schmiermittelmenge in einem Wärmetauscher (14) vor der ersten Anordnung von Lagern (6L) abgekühlt wird.

3. Versorgungsverfahren nach einem der Ansprüche 1 oder 2, wobei eine Schmiermittelmenge vor der zweiten Anordnung von Lagern (6H) erhitzt wird, wobei dieses Erhitzen durch Wärmeaustausch mit einer Schmiermittelrücklaufmenge von der zweiten Anordnung von Lagern (6H) erfolgt.

4. Versorgungsverfahren nach einem der Ansprüche 1 bis 3, wobei die erste Anordnung von Lagern (6L) über einen ersten Kreis (12L) mit Schmiermittel versorgt wird und die zweite Anordnung von Lagern (6H) über einen von dem ersten Kreis abgezweigten zweiten Kreis (12H) mit Schmiermittel versorgt wird.

5. Vorrichtung (10) zur Versorgung einer Turbomaschine (1) mit Schmiermittel, wobei die Turbomaschine (1) eine erste Anordnung von Lagern (6L) und eine zweite Anordnung von Lagern (6H) umfasst und wobei die zweite Anordnung geeignet ist, bei einer deutlich höheren Temperatur als die erste Anordnung zu arbeiten, wobei die Vorrichtung (10) **dadurch gekennzeichnet ist, dass** sie dazu ausgelegt ist, die zweite Anordnung mit Schmiermittel mit deutlich höherer Temperatur als die erste Anordnung zu versorgen.

6. Vorrichtung (10) nach Anspruch 5, umfassend einen ersten Kreis (12L), um die erste Anordnung von Lagern (6L) mit Schmiermittel zu versorgen, und einen zweiten Kreis (12H), um die zweite Anordnung von Lagern (6H) mit Schmiermittel zu versorgen, wobei der erste Kreis (12L) eine Abzweigstelle (20) zum zweiten Kreis (12H) umfasst.

7. Vorrichtung (10) nach Anspruch 6, wobei der erste Kreis (12L) zwischen der Abzweigstelle (20) und der ersten Anordnung von Lagern (6L) einen Wärmetauscher (14) für das Kühlen einer für die erste Anordnung von Lagern (6L) bestimmten Schmiermittelmenge umfasst.

8. Vorrichtung (10) nach einem der Ansprüche 6 oder 7, wobei der zweite Kreis (12H) einen Wärmetauscher (30) umfasst, um Wärme von wenigstens einer Schmiermittelrücklaufmenge von der zweiten Anordnung von Lagern (6H) auf eine Schmiermittelmenge, die für die Versorgung der zweiten Anordnung von Lagern (6H) bestimmt ist, zu übertragen.

9. Turbomaschine (1), umfassend eine erste Anordnung von Lagern (6L), eine zweite Anordnung von Lagern (6H), die geeignet ist, bei einer deutlich höheren Temperatur als die erste Anordnung zu arbeiten, und eine Vorrichtung (10) zur Schmiermittelversorgung nach einem der Ansprüche 5 bis 8.

10. Triebwerk-Einheit, insbesondere für Luftfahrt, umfassend eine Turbomaschine (1) nach Anspruch 9.

## Claims

1. A lubricant feed method for feeding a turbomachine (1) with lubricant, said turbomachine (1) having at least a first set of bearings (6L) and a second set of bearings (6H), both the first and the second set being fed with lubricant, and the second set of bearings (6H) operating at a temperature that is substantially higher than the first set, the method being **characterized in that** the second set of bearings (6H) is fed with lubricant at a temperature that is substantially higher than the first set.

2. A lubricant feed method according to claim 1, wherein a flow of lubricant is cooled in a heat exchanger (14) upstream from the first set of bearings (6L).

3. A lubricant feed method according to claim 1 or claim 2, wherein a lubricant flow is heated upstream from the second set of bearings (6H), this heating being obtained by exchanging heat with a flow of lubricant returning from the second set of bearings (6H).

4. A lubricant feed method according to any one of claims 1 to 3, wherein the first set of bearings (6L) is fed with lubricant by a first circuit (12L), and the second set of bearings (6H) is fed with lubricant by a second circuit (12H) branching from the first circuit.

5. A device (10) for feeding a turbomachine (1) with lubricant, said turbomachine (1) having a first set of bearings (6L) and a second set of bearings (6H), and said second set being suitable for operating at a temperature that is substantially higher than said first set, the device (10) being **characterized in that** it is configured to feed the second set with lubricant at a temperature that is substantially higher than the first set.

6. A device (10) according to claim 5, having a first circuit (12L) for feeding lubricant to the first set of bearings (6L), and a second circuit (12H) for feeding lubricant to the second set of bearings (6H), the first circuit (12L) having a branch point (20) leading to the second circuit (12H).

7. A device (10) according to claim 6, wherein the first circuit (12L) includes a heat exchanger (14) between said branch point (20) and the first set of bearings (6L) in order to cool a flow of lubricant for the first set of bearings (6L).

8. A device (10) according to claim 6 or claim 7, wherein the second circuit (12H) has a heat exchanger (30) for transmitting heat from at least a flow of lubricant returning from the second set of bearings (6H) to a flow of lubricant for feeding the second set of bearings (6H).

9. A turbomachine (1) having a first set of bearings (6L), a second set of bearings (6H) suitable for operating at a temperature substantially higher than the first set, and a lubricant feed device (10) according to any one of claims 5 to 8.

10. A turbine engine assembly, in particular for aviation purposes, including a turbomachine (1) according to claim 9.
